# EUROPÄISCHE PATENTANMELDUNG

(11) **EP 2 384 718 A2**
(43) Veröffentlichungstag der Anmeldung: **09.11.2011**
(21) Anmeldenummer: 11165144.4
(22) Anmeldetag: 06.05.2011
(51) Int. Cl.: A61C 13/34, A61C 9/00, A61K 6/00

(54) **Dentalmodellrohling**

(30) Priorität: 07.05.2010 DE 102010016847
(71) Anmelder: dentona AG, 44227 Dortmund (DE)
(72) Erfinder: Wilkesmann, Carsten Klaus, 44229, Dortmund (DE)
(74) Vertreter: Wenzel & Kalkoff

(57) **Zusammenfassung**

Die Erfindung betrifft einen Dentalmodellrohling mit einem Formkörper zum Herausarbeiten einer mindestens teilweisen Gebissnachbildung. Um eine kostengünstige Möglichkeit zur Herstellung naturgetreuer, das Gebiss eines Patienten nachbildender Dentalmodelle sowie entsprechender Dentalmodelle bereitzustellen, ist vorgesehen, dass der Formkörper aus Gips gebildet ist.

## Beschreibung

Die Erfindung betrifft einen Dentalmodellrohling mit einem Formkörper zum Herausarbeiten einer mindestens teilweisen Gebissnachbildung, sowie ein aus einem Dentalmodellrohling herausgearbeites Dentalmodell.

Derzeit ist es bekannt, Gebissnachbildungen, welche im Folgenden auch als Dentalmodelle bezeichnet werden, aus verschiedenen Materialien, nämlich klassisch aus Gips oder relativ neu aus Kunststoff herzustellen. Dentalmodelle sind ₃-D-Abbilder eines Gebisses eines Patienten und liefern dem Zahntechniker eine Grundlage für die Anfertigung von individuellem Zahnersatz oder dienen zur Anpassung von zahnmedizinischen Apparaturen gegen Zahnfehlstellungen.

Üblicherweise werden Dentalmodelle aus Gips in einem mehrstufigen Verfahren hergestellt, wobei zunächst vom Gebiss des Patienten eine Abformung genommen wird. Nach entsprechender Rückstellzeit, Konservierung und Bearbeitung wird die Abformung mit Gips ausgegossen. Das sich danach ergebene Gipsmodell kann nach der Aushärtung von der Abformung gelöst und getrimmt werden. Eine abschließende Bearbeitung dient dazu, das Modell zur Verwendung in einem Artikulator, der den Biss und die Kaubewegung des Patienten nachstellt, vorzubereiten.

Aufgrund der langen Prozesskette von der Abformung bis zum Dentalmodell bestehen eine Vielzahl von Fehlerquellen, die die Qualität des Dentalmodells negativ beeinflussen. Hierzu zählen bspw. die Abformung am Patienten, welche darüber hinaus für diesen höchst unangenehm ist, oder die Werkstoffeigenschaften, wie Expansions- und Schrumpfbewegungen der Abformungsmasse und des Gipses beim Aushärten. Die Dentalmodelle weisen deshalb häufig Ungenauigkeiten gegenüber der tatsächlichen Mundsituation des Patienten auf und bewirken, dass der am Dentalmodell zu erstellende Zahnersatz häufig nachgearbeitet werden muss.

Zur Umgehung der o. g. Probleme ist es bereits bekannt, den Zahnersatz unmittelbar aufgrund von ₃-D-Bilddaten herzustellen. Hierbei wird ein digitaler Abdruck von dem Gebiss des Patienten mit Hilfe von Kameras genommen, dieser digital bearbeitet und der benötigte Zahnersatz anschließend aus einem Materialblock herausgefräst. Als Materialien für den Zahnersatz sind bspw. biokompatible Legierungen, Zirkoniumoxid, Aluminiumoxid oder Kunststoffe bekannt. Nachteilig ist allerdings, dass der Zahntechniker aufgrund des fehlenden Dentalmodells keine Möglichkeit hat, die Passgenauigkeit des angefertigten Zahnersatzes zu kontrollieren und dessen äußeres Erscheinungsbild zu kreieren. Hinzu kommt, dass so angefertigter Zahnersatz bei der Herstellung hohe Kosten verursacht.

Der Erfindung liegt die Aufgabe zugrunde, einen Dentalmodellrohling zur Anfertigung naturgetreuer, das Gebiss eines Patienten nachbildender Dentalmodelle sowie entsprechende Dentalmodelle bereitzustellen.

Diese Aufgabe wird gelöst durch einen Dentalmodellrohling gemäß Anspruch ₁ und ein Dentalmodell gemäß Anspruch 16. Vorteilhafte Weiterbildungen der Erfindungen sind in den abhängigen Ansprüchen angegeben.

Der erfindungsgemäße Dentalmodellrohling weist einen Formkörper zum Herausarbeiten einer mindestens teilweisen Gebissnachbildung auf, wobei der Formkörper aus Gips gebildet ist.

Der Formkörper bildet einen Grundkörper, aus dem beliebig geformte Dentalmodelle durch mechanische Bearbeitung herausgearbeitet werden können. Der erfindungsgemäße Dentalmodellrohling ist dabei im besonderen Maße für eine spanabhebende Bearbeitung geeignet. Er kann bspw. händisch oder maschinell bearbeitet werden. Insbesondere ist er zur Bearbeitung in CNC-gesteuerten Fräs- oder Schleifmaschinen, mit den dort auftretenden hohen Schnittgeschwindigkeiten geeignet, so dass sich in kürzester Zeit exakte Gebissnachbildungen herstellen lassen.

Dadurch, dass der Dentalmodellrohling im Gegensatz zum klassischen Gießverfahren bereits vollständig ausgehärtet ist, bevor das Dentalmodell aus ihm heraus gefräst wird, unterliegt das entstehende Dentalmodell keinen Formänderungen durch Expansion bzw. Schrumpfen während des Aushärtungsprozesses.

Insgesamt lässt sich somit eine sehr gute Detailwiedergabe des entstehenden Gebissabbildes erzielen. Weiter vorteilhaft ist die durch den Dentalmodellrohling aus Gips gegebene Haptik des Dentalmodells und die im Bedarfsfall leichte Nachbearbeitbarkeit des entstehenden Gebissabbildes, die mit bekannten und vorhandenen Werkzeugen erfolgen kann.

Der erfindungsgemäße Dentalmodellrohling ermöglicht es damit, auf eine besonders patientenfreundliche und moderne Weise eine detailgetreue digitale Abformung der Mundsituation herstellen zu können, ohne auf die besonderen Vorteile eines aus Gips bestehenden Dentalmodells verzichten zu müssen.

Der Formkörper kann auf unterschiedliche Verfahrensweisen hergestellt werden. Beispielsweise ist es möglich, den Gips stangenförmig, plattenförmig oder als Block zu gießen, um anschließend Formkörper in der benötigten Größe auszuschneiden. Besonders bevorzugt wird jedoch ein direktes Ausgießen einer Form, die den benötigten Formkörper, in Form und Größe abbildet.

Damit der Zahntechniker den Zahnersatz für den späteren Einsatz in ein Gebiss anpassen kann, benötigt er zumindest den Teil des Gebisses als Nachbildung, in das der Zahnersatz später eingepasst werden soll. Der Formkörper weist daher eine Größe und Form auf, die es zulässt, zumindest Teilbereiche eines menschlichen Gebisses aus ihm heraus zu arbeiten. Ferner ist es auch möglich, den Formkörper so auszugestalten, dass mehrere Gebissbereiche bzw. vollständige Ober- und Unterkiefer aus einem Formkörper herstellbar sind. Letztlich kann der Formkörper auch so gewählt werden, dass mehrere vollständige Gebissnachbildungen aus einem Formkörper hergestellt werden können.

Maßgeblich für die Formgebung ist in der Regel die zur Bearbeitung des Rohlings vorgesehene Bearbeitungsstation bspw. eine Fräsmaschine, in welcher aus dem Formkörper die Dentalmodelle herausgearbeitet werden. Der Formkörper kann grundsätzlich jede beliebige, bspw. eine im Querschnitt elliptische oder quadratische Gestalt aufweisen. Verwendbar sind auch halbelliptische oder halbkreisförmige Formen, die im Wesentlichen der bogenförmigen Grundform eines Dentalmodells oder einer Sockelplatte entsprechen. Ferner können für den Formkörper Kombinationen aus unterschiedlichen Formen verwendet werden. Hier ist beispielsweise ein runder oder elliptischer Bestandteil mit einem quadratischen oder rechteckigen Bestandteil kombinierbar.

Besonders bevorzugt werden jedoch kreisförmige oder polygonale Querschnitte. Bei polygonalen Querschnitten weisen die Formkörper bspw. eine Abmessung (Länge x Breite x Stärke) von bevorzugt 60 mm x 30 mm x 20 mm bis 400 mm x 200 mm x 45 mm auf. Bei einem kreisförmigen Querschnitt werden bevorzugt Durchmesser von 50 mm bis 150mm, besonders bevorzugt 75 mm bis 125 mm und vorzugsweise mit 90 mm bis 110 mm verwendet, da mit diesen Größen ein Großteil aller anfallenden Gebissnachbildungen mit der Entfernung von wenig Materialvolumen hergestellt werden können.

Gemäß einer bevorzugten Weiterbildung der Erfindung weist der Formkörper eine an die herzustellende Gebissnachbildung angepasste Form auf. D.h. er hat eine weitestgehend gebogene Form und entspricht damit im Wesentlichen der Kieferstruktur. Dies erlaubt eine schnellere Herstellung des Dentalmodells aus dem Rohling aufgrund des geringeren Bearbeitungsaufwandes.

Besonders bei Gipsmodellrohlingen, aus denen mehrere Dentalmodelle heraus gearbeitet werden sollen, sind auch größere Abmessungen als die vorgenannten Abmessungen und Querschnitte möglich. Die bevorzugten kreisförmigen und polygonalen Querschnitte und Abmessungen sowie eine Formgebung entsprechend des herzustellenden Dentalmodells lassen sich besonders leicht produzieren, sind effizient zu bearbeiten und gewährleisten eine geringe Materialabtragung und geringen Materialausschuss.

Die Stärke der Formkörper ist von der herzustellenden Gebissnachbildung abhängig. So können Formkörper, die für die Herstellung von Kindergebissen geeignet sein sollen bedeutend dünner ausgestaltet sein als Formkörper, die für die Gebissnachbildung von Erwachsenen geeignet sein müssen. Vorteilhaft sind bei den Formkörpern Stärken, die ein detailgetreues Ausarbeiten des Dentalmodells aus dem Rohling ermöglichen und bei denen möglichst wenig Material entfernt werden muss. Bevorzugt werden deshalb Stärken von 1 cm bis 4,5 cm, besonders bevorzugt von 1,5 cm bis 3,5 cm und vorzugsweise Stärken zwischen 2,5 und 3 cm.

kann der Formkörper aus beliebigen Gipsen hergestellt werden, die die Anforderungen an die Bearbeitbarkeit erfüllen. Nach einer vorteilhaften Weiterbildung ist der Formkörper jedoch aus einem Dentalgips, wie er derzeitig zur Herstellung durch Ausgießen benutzt wird, hergestellt. Mit diesen können die besonders feinen Strukturen der Mundsituation detailgetreu nachgebildet werden. Darüber hinaus sind sie dem Zahntechniker in der Bearbeitung vertraut. Um ein zerstörungsfreies maschinelles Arbeiten zu gewährleisten, werden in besonders vorteilhafterweise Gipse verwendet, die eine besonders hohe Gefügefestigkeit aufweisen und denen deshalb bspw. Kristallgefügeoptimierer mit einem bevorzugten Anteil von 1 % bis 10 %, besonders bevorzugt 2,5 % bis 7 % und vorzugsweise 3,5 % bis 5 % beigemengt sind. Besonders bevorzugt werden Gipse verwendet, denen neben dem Kristalgefügeoptimierer noch Entschäumer mit einem Mengenanteil von bis zu 0,1 % beigemengt sind. Derartige Gipse weisen eine sehr hohe Gefügefestigkeit sowie geringe Porosität auf und erlauben die Herstellung von Dentalmodellen mit einem besonders hohen Detailgrad. Darüber hinaus bewirkt die geringe Porosität eine Resistenz gegenüber Feuchtigkeit und Flüssigkeiten.

Nach einer besonders vorteilhaften Weiterbildung der Erfindung werden Dentalgipse mit zumindest teilweise synthetisch hergestellten Bestandteilen verwendet. Synthetische Bestandteile weisen einen besonders hohen Reinheitsgrad auf und sind daher für die bearbeitenden Werkzeuge, wie bspw. Handwerkzeuge oder Fräswerkzeuge ausgesprochen schonend. Hierdurch lassen sich hohe Standzeiten der Werkzeuge sowie eine weiter gesteigerte Qualität der aus den Dentalmodellrohlingen herzustellenden Dentalmodelle erzielen. Bevorzugt wird dem Gips zusätzlich ein Flexibilisierer mit einem Mengenanteil von 10 % bis 30 %, besonders bevorzugt von 15 % bis 25 % und vorzugsweise von 18 % bis 22 % beigemengt.

Während der Bearbeitung des Dentalmodellrohlings, insbesondere während der maschinellen Bearbeitung durch bspw. CNC-gesteuerte Fräsmaschinen, ist eine feste Einspannung und Führung des Dentalmodellrohlings notwendig. In einer besonders bevorzugten Ausführungsform des Dentalmodellrohlings sind am Formkörper Befestigungsmittel angeordnet, die zum Befestigen des Rohlings während der Bearbeitung genutzt werden können. Geeignete Befestigungsmittel sind bspw. Stifte, Bolzen oder Haken, die in dem Rohling angeordnet sind und an denen der Dentalmodellrohling in der Bearbeitungsmaschine gehalten werden kann. Bevorzugt werden jedoch Ausnehmungen wie bspw. Löcher, Nuten oder Vorsprünge am Rohling angeordnet, die eine besonders gleichmäßige und feste Einspannung des Rohlings ermöglichen. Besonders bevorzugt weist der Rohling eine mindestens abschnittsweise umlaufende Erhebung nach Art eines Steges auf, durch die die Belastungen der Einspannung auf den Rohling gleichmäßig verteilt werden können, was einer Beschädigung oder Zerstörung in besonderem Maße vorbeugt.

Nach einer Weiterbildung der Erfindung weist der Formkörper mindestens einen Vorsprung und/oder eine Vertiefung auf, die zum Ausrichten einer aus dem Rohling herausgearbeiteten Sockelplatte an einer Split-Cast-Platte geeignet ist. Der Vorsprung und/oder die Vertiefung kann grundsätzlich beliebig ausgebildet sein, wobei sich deren Gestalt vorzugsweise an dem entsprechenden Vorsprung und/oder der Vertiefung an der zu kombinierenden Split-Cast-Platte orientiert, um eine zuverlässige Verbindung der Platten zu erreichen. Geeignete Formen für den Vorsprung oder die Vertiefung sind aus dem Stand der Technik bekannt. Diese Ausgestaltung der Erfindung ermöglicht im Fall der gemäß einer vorteilhaften Weiterbildung vorgesehenen Herstellung der Sockelplatte aus dem Rohling -separat oder einstückig mit dem Dentalmodell- eine besonders kostengünstige Herstellung einer angepassten Sockelplatte, gegebenenfalls bereits einstückig mit dem Dentalmodell.

Der Vorsprung oder die Vertiefung kann auch eine Roh-Form aufweisen, aus der besonders effizient die endgültige Form für einen Vorsprung und/oder eine Vertiefung -die aus dem Stand der Technik für Sockelplatten bekannt ist- herausgearbeitet werden kann.

In einer besonderen Ausführungsform weist der Dentalmodellrohling Fixierungsmittel oder Aufnahmen für Fixierungsmittel auf. Die Fixierungsmittel sollen insbesondere dazu dienen, das aus dem Dentalmodellrohling herausgearbeitete Dentalmodell auf einer Sockelplatte, die aus einem Artikulator herausnehmbar als Bearbeitungsgrundlage für das Dentalmodell dient, zu fixieren. Besonders bevorzugt sind hierbei Haltestifte, die am Rohling angeordnet sind und mit denen das aus dem Rohling herausgearbeitete Dentalmodell auf der Sockelplatte leicht und vor allem abnehmbar fixiert werden kann. Nach einer besonders vorteilhaften Ausgestaltung ist eine Aufnahme für das Fixierungsmittel in den Formkörper des Dentalmodellrohlings eingebracht. Insbesondere sind Löcher in einem festgelegten Abstand zueinander in den Rohling eingebracht, wobei in den Löchern bspw. die Haltestifte nach dem Herausfräsen des Dentalmodells befestigt werden können.

In einer weiter bevorzugten Ausführungsform weist der Dentalmodellrohling ein Sicherungsmittel auf, mit dem sich das aus dem Formkörper hergestellte Dentalmodell unmittelbar an einer Aufnahme oder Gegenkörper befestigen lässt. Das Sicherungsmittel kann bereits während des Herstellungsprozesses des Dentalmodellrohlings, bspw. durch Einlegen in die Form des Dentalmodellrohlings oder auch nachträglich, bspw. durch Ankleben des Sicherungsmittels in eine Einfräsung an dem Dentalmodellrohling angeordnet werden.

Das Sicherungsmittel besteht bevorzugt aus einem ersten und zweiten Kontaktelement, die korrespondierend ausgebildet sind. Bevorzugt befindet sich das erste Kontaktelement am oder im Formkörper des Dentalmodellrohlings, während das zweite Kontaktelement bevorzugt in einer Split-Cast-Platte angeordnet ist, die im Artikulator befestigt ist und an der die Sockelplatte, die auch einstückig mit dem Dentalmodell aus dem Dentalmodellrohling herausgebildet sein kann, lösbar fixiert werden kann. Die Kontaktelemente sind vorzugsweise derart ausgestaltet, dass sie nach dem Zusammenbringen nur mit erhöhtem Kraftaufwand wieder voneinander getrennt werden können. Dies kann bspw. durch eine druckknopfähnliche Verbindung erfolgen. Bevorzugt sind die Kontaktelemente jedoch derart ausgebildet, dass sie magnetisch zusammen wirken. Dabei ist bspw. das erste Kontaktelement, welches bspw. ein ferromagnetisches Metallplättchen ist, in dem Rohling angeordnet, während das zweite Kontaktelement als Magnet an der Split-Cast-Platte angeordnet ist. Beim Zusammenbringen des entsprechend ausgebildeten Dentalmodells und der Split-Cast-Platte werden beide Teile aneinander fixiert.

In einer besonders bevorzugten Ausführungsform sind die Kanten des Dentalmodellrohlings bearbeitet. Dies betrifft insbesondere Kanten des Formkörpers bzw. Kanten der Ausnehmungen und/oder Erhebungen oder der Vorsprünge und/oder Vertiefungen. Damit insbesondere beim Herausarbeiten des Dentalmodells aus dem Dentalmodellrohling und dem damit verbundenem Druck durch die Bearbeitungswerkzeuge auf den Rohling die besonders druckempfindlichen Kanten nicht abplatzen oder anderweitig beschädigt werden, können diese durch eine vorbereitende Bearbeitung geschützt sein. Bevorzugt sind hierfür Rundungen oder Fasen angebracht bzw. die Kanten werden entgratet, angeschliffen oder einfach gebrochen.

Durch diese Bearbeitung der Kanten vermindern sich besonders durch Druck erzeugte Scherkräfte auf die Kanten, die neben der Bearbeitung auch beim Verpacken oder dem Transport der Rohlinge auf die Kanten einwirken können. Durch diese vorteilhafte Ausgestaltung können mögliche Beschädigungen der Kanten und damit ein Versagen des Rohlings verhindert werden.

In einer weiteren besonders bevorzugten Ausführungsform ist der Formkörper aus Gips und/oder ein Befestigungsmittel farbig ausgebildet. Durch eine farbige Ausgestaltung sind bei der späteren Bearbeitung des Dentalmodells Strukturen wie bspw. Schattierungen oder Übergänge zwischen dem nachgebildeten Zahn und Zahnfleisch sowie Präparationsgrenzen besser erkennbar. Auch kann der Rohling durch die farbige Ausgestaltung eine Farbcodierung, ein Muster oder bspw. ein einem Logo ähnliche Erkennung erhalten. Die farbige Ausgestaltung kann ein- oder mehrfarbig erfolgen und durch nachträgliches Einfärben des Rohlings erfolgen. Besonders vorteilhaft wird jedoch dem Gips bzw. dem Gipspulver vor dem Gießen zum Rohling ein Farbpigment beigemischt.

In einer weiteren Ausführungsform ist der Dentalmodellrohling mit einer feuchtigkeits-und/oder flüssigkeitsabweisenden Oberfläche versehen. Diese besondere Oberfläche ergibt sich durch die Beschaffenheit des Gipses oder wird durch eine separate Oberflächenbeschichtung erreicht. Die Oberflächenbeschichtung bzw. Beschaffenheit ist so ausgebildet, dass sie die Aufnahme von Feuchtigkeit oder von Flüssigkeiten durch den Rohling erschwert oder ganz verhindert.

Besonders bevorzugt besteht die Oberflächenbeschichtung aus einem Kunststoff und/oder Kunstharz und/oder aus einer Wachsschicht, die den Dentalmodelrohling zum Schutz vor Feuchtigkeit und Flüssigkeiten überdeckt. Der besondere Vorteil der feuchtigkeits- oder flüssigkeitsabweisenden Oberflächen besteht in der Gewährleistung eines besonders form- und gefügestabilen Rohlings über lange Zeit. Es ist dadurch gesichert, dass er auch nach längeren Lagerzeiten dauerhaft gut bearbeitet werden kann. Weiter wird der Rohling vor Verfärbungen geschützt und zusätzlich weist die Oberfläche einen Schutz gegen Verschmutzung auf.

Grundsätzlich kann der Dentalmodellrohling zur Identifizierung eine Markierung, wie bspw. einen Strichcode aufweisen. Gemäß einer bevorzugten Weiterbildung der Erfindung wird jedoch ein Speicherchip im oder am Rohling angeordnet.

Der Chip, bspw. ein RFID-Chip, eignet sich dazu verschiedene Informationen abrufbar speichern zu können. Hierzu zählen insbesondere Informationen über den Rohling, wie bspw. ein Nummerncode zu dessen Identifizierung, Informationen über die Zusammensetzung des Rohlings, verschiedene Herstellungsdaten, Aufbau, Form und Größe des Rohlings sowie von einer Fräsmaschine verwertbare Erkennungs- und Identifizierungsdaten. Ferner eignet sich der Chip, insbesondere wenn dieser widerbeschreibbar, vorzugsweise kontaktlos ist, zur Ablage von spezifischen Patientendaten, für eine einfache Zuordnung des aus dem Rohling hergestellten Dentalmodells.

Grundsätzlich kann der Chip, insbesondere wenn er nur zur Speicherung rohlingsspezifischer Daten genutzt wird, an beliebiger Stelle im oder am Rohling angeordnet werden, da eine Abrufbarkeit der Daten nach Herstellung des Dentalmodells nicht mehr erforderlich ist.

Nach einer vorteilhaften Weiterbildung der Erfindung ist der Chip jedoch derart im Dentalmodellrohling angeordnet, dass er während des Fräsprozesses nicht mit dem Werkzeug in Kontakt gelangt. Besonders vorteilhaft ist der Chip hierzu im Bereich des herzustellenden Dentalmodells oder im Falle der vorteilhafterweise vorgesehenen Ausbildung der Sockelplatte aus dem Rohling im Bereich der späteren Sockelplatte angeordnet. Hierdurch wird gewährleistet, dass der Chip nicht während des Formgebungsprozesses zerstört wird, sodass der Chip auch zur Speicherung von Daten zum hergestellten Dentalmodell genutzt werden kann.

Kennzeichnend für das erfindungsgemäße Dentalmodell zur Anpassung von Zahnersatz ist, dass es aus einem Formkörper aus Gips durch spanabhebende Bearbeitung herausgebildet ist. Die spanabhebende Bearbeitung betrifft insbesondere händische oder maschinelle Bearbeitungsmethoden, wie Fräsen, Schleifen oder Feilen, wobei besonders bevorzugt das Dentalmodell aus einem Formkörper aus Gips durch CNC-unterstütztes Fräsen oder Schleifen hergestellt ist. Als Vorlage hierfür kann bspw. eine digitale Abformung der Mundsituation eines Patienten dienen.

Die Vorteile des erfindungsgemäßen Dentalmodells liegen in der besonderen Genauigkeit des Dentalmodells. Zum einen ist der Gips ausgehärtet, bevor das Dentalmodell aus ihm heraus gearbeitet wird, zum anderen ist die Prozesskette ausgehend vom digitalen Abdruck bis zum fertig gestellten Dentalmodell weniger fehleranfällig. Damit verbunden besteht die Möglichkeit, eine besonders detailgetreue Nachbildung eines Gebisses anzufertigen. Das erfindungsgemäße Dentalmodell vereint dabei die besonders patientenfreundliche, moderne und detailgetreue digitale Abformung der Mundsituation mit der für den Zahntechniker gewohnten Haptik und den physikalischen Eigenschaften der für ihn gewohnten Dentalmodelle. Hinzukommt, dass der Zahntechniker weiterhin seine bisher gebräuchlichen Werkzeuge benutzen kann und sich nicht mit neuen Werkzeugen und neuen Bearbeitungsmethoden vertraut machen muss.

In einer besonderen Ausführungsform des Dentalmodells ist aus dem Formkörper das Dentalmodell und eine Sockelplatte herausgebildet. Dies kann in der Weise erfolgen, dass nach dem Herstellungsvorgang zwei separate Teile vorliegen. Nach einer besonders vorteilhaften Ausgestaltung sind das Dentalmodell und die Sockelplatte jedoch einteilig ausgebildet. Der besondere Vorteil hierbei ist, dass keine weiteren Bearbeitungsschritte unternommen werden müssen, um das Dentalmodell auf einer Sockelplatte zu befestigen. Dies ist sowohl zeit- als auch kostensparend.

Besonders bevorzugt ist an der Sockelplatte des Dentalmodells ein Vorsprung und/oder eine Vertiefung angeordnet. Diese sind vorteilhafterweise derart ausgebildet, dass sie mit einem Vorsprung und/oder einer Vertiefung an einer Split-Cast-Platte korrespondieren. Dadurch ist eine besonders einfache und sichere Fixierung der Sockelplatte an der Split-Cast-Platte gewährleistet.

Gemäß einer Weiterbildung der Erfindung ist der Dentalmodellrohling gekennzeichnet durch ein in oder an einer Sockelplatte angeordnetes erstes Kontaktelement eines Sicherungsmittels.

Besonders bevorzugt ist der Dentalmodellrohling gekennzeichnet durch eine am oder im Dentalmodell angeordnete Aufnahme für ein Fixierungsmittel.

Im Folgenden werden Ausführungsbeispiele der Erfindung an Hand von tabellarisch dargestellten Rezepturen für Dentalmodellrohlinge sowie Zeichnungen näher erläutert. In den Zeichnungen zeigen:
- Fig. 1: eine perspektivische Darstellung einer ersten Ausführungsform eines Dentalmodellrohlings;
- Fig. 2: eine perspektivische Darstellung der Unterseite der Ausführungsform des Dentalmodellrohlings aus Fig. 1;
- Fig.3: eine perspektivische Darstellung einer zweiten Ausführungsform des Dentalmodellrohlings mit Vorsprüngen und Sicherungsmittel an der Unterseite;
- Tab. 1: eine besonders kostengünstige Gipsrezeptur für Dentalmodellrohlinge;
- Tab. 2: eine Gipsrezeptur für Dentalmodellrohlinge mit der Rohlinge mit guter Qualität hergestellt werden können und
- Tab. 3: eine besonders hochwertige Gipsrezeptur für Dentalmodellrohlinge höchster Qualität.

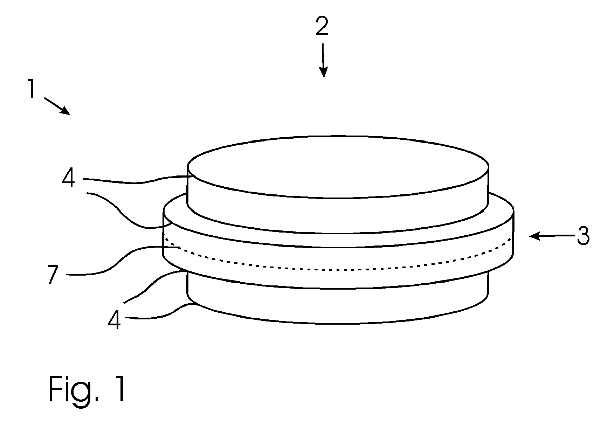

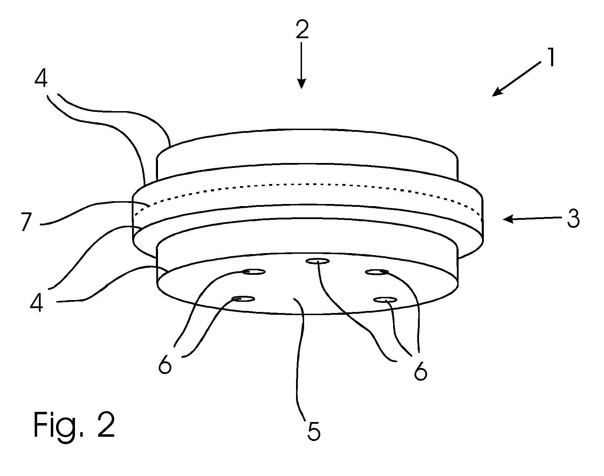

Die in Figur 1 bis Figur 3 dargestellten Dentalmodellrohlinge 1, 1a weisen einen Formkörper 2 mit einem runden Querschnitt auf. Um eine Einspannung des Dentalmodellrohlings 1, 1a zum Bearbeiten zu ermöglichen, ist eine Erhebung 3 nach Art eines Steges vorgesehen, die umlaufend an dem Formkörper 2, ungefähr mittig 7, angeordnet ist.

An dem Dentalmodellrohling 1 sind an der Unterseite 5 des Formkörpers 2 Aufnahmen 6 angeordnet, die als Löcher ausgebildet sind und in die Haltestifte (hier nicht dargestellt) zur Anordnung des Dentalmodellrohlings 1 an einer Sockelplatte (hier nicht dargestellt) eingesteckt werden können. Diese werden bspw. beim Gießen des Dentalmodelrohlings 1 mit angeordnet oder auch erst beim Herausarbeiten des Dentalmodells aus dem Dentalmodellrohling 1 mit eingearbeitet.

Die Aufnahmen 6 sind so positioniert, dass ein ausgefrästes Dentalmodell (hier nicht dargestellt) mit den Aufnahmen 6 ausgerichtet auf eine Sockelplatte aufgesetzt werden kann. Die Fräseinheit orientiert sich beim Herausarbeiten des Dentalmodells aus dem Dentalmodellrohling 1 an den Aufnahmen 6.

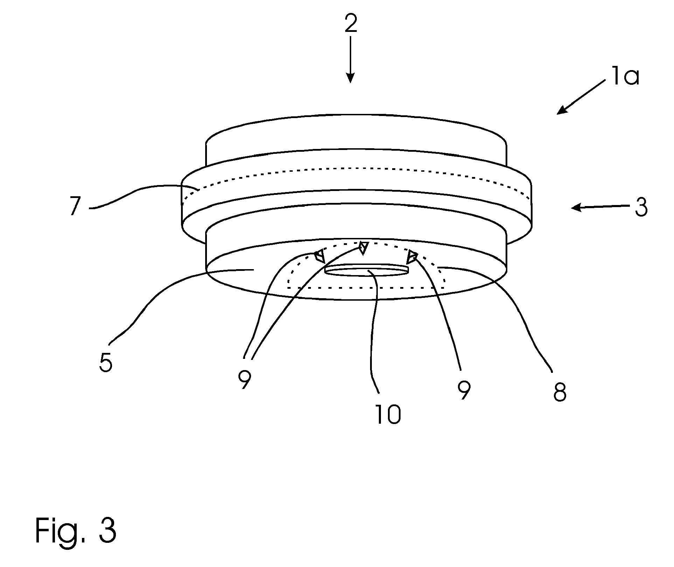

Bei der in Figur 3 dargestellten zweiten Ausführungsform des Dentalmodellrohlings 1a sind an der Unterseite 5 des Formkörpers 2 Vorsprünge 9 angeordnet, die zum Ausrichten einer aus dem Dentalmodellrohling 1a herausgefrästen Sockelplatte 8 -hier durch Strichlinie angedeutet- an einer Split-Cast-Platte (hier nicht dargestellt) geeignet sind. Die Vorsprünge 9 wurden beim Herstellen des Dentalmodellrohlings 1a mit angegossen. Weiter ist ein erstes Kontaktelement eines Sicherungsmittel -hier als metallische Scheibe 10 ausgebildet- an der Unterseite 5 des Dentalmodellrohlings 1a angebracht. Die metallische Scheibe 10 wirkt mit einem Magneten (hier nicht dargestellt) zusammen, der als zweites Kontaktelement des Sicherungsmittels an der Split-Cast-Platte angeordnet ist.

Die Vorsprünge 9 und die metallische Scheibe 10 sind so am Dentalmodellrohling 1a positioniert, dass sie an einer aus dem Dentalmodellrohling 1a herausgefrästen Sockelplatte 8 angeordnet sind. Die Sockelplatte 8 kann separat oder einstückig mit dem Dentalmodell aus dem Dentalmodellrohling 1a herausgefräst werden.

Zum Bearbeiten des Dentalmodellrohlings 1, 1a mit einer CNC-gesteuerten Fräseinheit (hier nicht dargestellt) wird der Dentalmodellrohling 1, 1a an der Erhebung 3 eingespannt. Die Fräseinheit hat einen digitalen Abdruck des herzustellenden Gebisses als Fräsvorlage gespeichert. Damit beim Einspannen und Bearbeiten des Dentalmodellrohlings 1, 1a keine Beschädigungen am Rohling auftreten, sind die Kanten des Rohlings leicht gebrochen (hier nicht dargestellt).

**Tabelle 1**

| Einsatzstoff | Einsatz [%] |
|---|---|
| Alpha-Halbhydrat* | 59,72 |
| Dihydrat | 40 |
| Verzögerer | 0,02 |
| Beschleuniger | 0,25 |
| Duftstoff | 0,01 |

| | |
|---|---|
| * aus Autoklawerfahren | |

**Tabelle 2**

| Einsatzstoff | Einsatz [%] |
|---|---|
| Alpha-Halbhydrat* | 96,168 |
| Dihydrat | 0,5 |
| Verzögerer | 0,02 |
| Beschleuniger | 0,25 |
| Verflüssiger | 1,5 |
| Hydrophobierer | 0,5 |
| Netzmittel | 0,002 |
| Duftstoff | 0,01 |
| Pigment 1 | 0,01 |
| Pigment 2 | 0,05 |

| | |
|---|---|
| * aus Autoklawerfahren | |

**Tabelle 3**

| Einsatzstoff | Einsatz [%] |
|---|---|
| Alpha-Halbhydrat** | 35 |
| Alpha-Halbhydrat* | 28,313 |
| Dihydrat | 0,5 |
| Kristallgefügeoptimierer | 6,5 |
| Verzögerer | 0,02 |
| Beschleuniger | 0,25 |
| Verflüssiger | 1,5 |
| Flexibilisierer | 20 |
| Füllstoff | 5 |
| Entschäumer | 0,005 |
| Hydrophobierer | 0,5 |
| Netzmittel | 0,002 |
| Duftstoff | 0,01 |
| Pigment 1 | 1 |
| Pigment 2 | 1,25 |
| Pigment 3 | 0,15 |

| | |
|---|---|
| * aus Autoklawerfahren ** aus Suspensionsverfahren | |

## Patentansprüche

1. Dentalmodellrohling (1) mit einem Formkörper (2) zum Herausarbeiten einer mindestens teilweisen Gebissnachbildung **dadurch gekennzeichnet, dass** der Formkörper (2) aus Gips gebildet ist.

2. Dentalmodellrohling nach Anspruch 1, **dadurch gekennzeichnet, dass** der Formkörper (2) einen kreisförmigen oder einen polygonalen Querschnitt aufweist.

3. Dentalmodellrohling nach Anspruch 1 oder 2, **dadurch gekennzeichnet, dass** der Formkörper (2) eine an die herzustellende Gebissnachbildung angepasste Form aufweist.

4. Dentalmodellrohling nach einem der vorhergehenden Ansprüche, **gekennzeichnet durch** ein am Formkörper (2) angeordnetes
- Befestigungsmittel, insbesondere eine Ausnehmung und/oder eine Erhebung (3) und/oder
- Fixierungsmittel oder eine am Formkörper (2) angeordnete Aufnahme (6) für ein Fixierungsmittel und/oder
- Sicherungsmittel, insbesondere ein erstes Kontaktelement eines Sicherungsmittels.

5. Dentalmodellrohling nach einem der vorhergehenden Ansprüche, **dadurch gekennzeichnet, dass** am Formkörper (2) ein Vorsprung (9) und/oder eine Vertiefung zum Ausrichten einer aus dem Dentalmodellrohling (1, 1a) herausgearbeiteten Sockelplatte (8) an einer Split-Cast-Platte angeordnet ist.

6. Dentalmodellrohling nach einem der vorhergehenden Ansprüche, **gekennzeichnet durch** einen in dem Formkörper (2) angeordneten Datenspeicher, insbesondere Speicherchip.

7. Dentalmodellrohling nach einem der vorhergehenden Ansprüche, **dadurch gekennzeichnet, dass**
- mindestens eine Kante (4), insbesondere die Kante (4) einer Ausnehmung und/oder eines Vorsprunges (3) abgerundet, gefast, gebrochen, angeschliffen und/oder entgratet ist und/oder
- der Formkörper (2) und/oder ein Befestigungsmittel farbig ausgebildet ist.

8. Dentalmodellrohling nach einem der vorhergehenden Ansprüche, **dadurch gekennzeichnet, dass** der Formkörper (2) zur Ausbildung jeweils eines vollständigen Unterkiefers und/oder eines vollständigen Oberkiefers geeignet ist.

9. Dentalmodellrohling nach einem der vorhergehenden Ansprüche, **dadurch gekennzeichnet, dass** der Gips Alpha-Halbhydrat und/oder Beta-Halbhydrat und Calciumsulfat-Anhydrit und/oder Calciumsulfat-Dihydrat und Additive, insbesondere Retarder und/oder Acceloratoren und/oder Konsistenzregulatoren und/oder Füllstoffe und/oder Plastifizierer und/oder Hydrophobierer und/oder Entschäumer und/oder Netzmittel und/oder Duftstoffe und anorganische Pigmente, insbesondere Eisenoxid und/oder Titanoxid und/oder Chromoxid und/oder Silikat und/oder Mischungen von anorganischen Pigmenten, enthält.

10. Dentalmodellrohling nach einem der vorhergehenden Ansprüche, **gekennzeichnet durch** eine feuchtigkeits- und/oder flüssigkeitsabweisende Oberfläche, insbesondere **gekennzeichnet durch** eine Oberfläche, die eine Oberflächenbeschichtung aus einem Kunststoff und/oder Kunstharz und/oder Wachs aufweist.

11. Dentalmodell zur Anpassung von Zahnersatz, **dadurch gekennzeichnet, dass** das Dentalmodell aus einem Formkörper (2) aus Gips durch spanabhebende Bearbeitung, insbesondere Fräsen herausgebildet ist.

12. Dentalmodell nach Anspruch 11, **dadurch gekennzeichnet, dass** das Dentalmodell und eine Sockelplatte (8) aus dem Formkörper (2) herausgebildet sind.

13. Dentalmodell nach Anspruch 11 oder 12, **dadurch gekennzeichnet, dass** das Dentalmodell und eine Sockelplatte (8) einteilig oder jeweils separat aus dem Formkörper (2) herausgebildet sind.

14. Dentalmodell nach einem der Ansprüche 11 bis 13, **dadurch gekennzeichnet, dass** an einer Sockelplatte (8) Vorsprünge (9) und/oder Vertiefungen angeordnet sind.

15. Dentalmodell nach einem der Ansprüche 11 bis 14, **gekennzeichnet durch** ein in oder an einer Sockelplatte angeordnetes erstes Kontaktelement (10) eines Sicherungsmittels und/oder eine am oder im Dentalmodell angeordnete Aufnahme (6) für ein Fixierungsmittel.
